# EUROPÄISCHE PATENTSCHRIFT

(11) **EP 0 765 077 B1**
(45) Veröffentlichungstag und Bekanntmachung des Hinweises auf die Patenterteilung: **31.01.2001**
(21) Anmeldenummer: 96112447.6
(22) Anmeldetag: 01.08.1996
(51) Int. Cl.: H04N 5/225

(54) **Verfahren, Vorrichtung und Zusatzeinrichtung zum Vermeiden des Helligkeitsflimmerns eines aus einer Filmkamera ausgespiegelten Video-Bildes**
Method, device and auxiliary device for preventing brightness flickering of a video image deflected out of a film camera
Méthode, dispositif et dispositif accessoire pour empêcher le papillotement de la luminosité d'une image vidéo déflectée par une caméra cinématographique

(30) Priorität: 21.09.1995 DE 19535118; 30.11.1995 DE 19544789
(43) Veröffentlichungstag der Anmeldung: 26.03.1997
(73) Patentinhaber: Denz, Peter, 81673 München (DE)
(72) Erfinder: Denz, Peter, 81673 München (DE)
(74) Vertreter: Zinnecker, Armin, Dipl.-Ing.

(56) Entgegenhaltungen:
- DE-A- 4 132 853
- DE-A- 4 211 427
- DE-A- 4 302 173
- DE-C- 3 833 823
- US-A- 4 928 171

## Beschreibung

Die Erfindung betrifft ein Verfahren zum Vermeiden des Helligkeitsflimmerns eines Videobildes einer auf den Strahlengang einer Filmkamera mit einer Spiegelblende oder einen anderen periodisch unterbrochenen optischen Strahlengang gerichteten Videokamera mit einem Videosensor, bei dem die von dem Videosensor erfaßten Bilder der Videokamera zugeleitet werden, wobei die auf dem Videosensor auftretenden Hell-Dunkel-Phasen (Belichtungsintervalle) erfaßt werden. Die Erfindung betrifft ferner eine Vorrichtung zur Durchführung dieses Verfahrens, bestehend aus einem periodisch unterbrochenen optischen Strahlengang vorzugsweise einer Filmkamera mit einer Spiegelblende, einem Videosensor, einer Videokamera und einem Detektor, vorzugsweise einem Helligkeitsdetektor zum Erfassen der auf dem Videosensor auftretenden Hell-Dunkel-Phasen (Belichtungsintervalle). Die Erfindung betrifft schließlich ein Zusatzgerät zur Durchführung des eingangs angegebenen Verfahrens.

Aus der DE 4 132 853 A ist ein Verfahren und eine Vorrichtung zum Vermeiden des Helligkeitsflimmerns des Videobildes einer auf den Strahlengang einer Filmkamera mit einer Spiegelblende gerichteten Videokamera bekannt. Die Videokamera besitzt einen Videosensor. Die von dem Videosensor erfaßten Videobilder werden in einem Zwischenspeicher in der Videokamera zwischengespeichert. Dabei werden die auf dem Videosensor auftretenden Hell-Dunkel-Phasen (Belichtungsintervalle) erfaßt.

Videosucherkameras für Spiegelreflexfilmkameras werden seit vielen Jahren eingesetzt. Die Videokamera erhält das Bild ebenso wie der Sucher abwechselnd mit dem Film. Während der Belichtungszeit des Filmes bleibt der Bildaufnehmer der Videokamera unbelichtet. Hierdurch fallen je nach Filmkamerageschwindigkeit Bildabschnitte aus, was insbesondere bei schnellen Halbleiterbildaufnehmern (CCD) zu Flackererscheinungen führt, welche die Bildbeurteilung erheblich erschweren und eine Aufzeichnung unmöglich machen. Bei Videokameras mit Aufnahmeröhren fällt dieser Effekt aufgrund der Trägheit der Photokathode weniger stark aus.

Zur Vermeidung oder Verringerung dieser Flackererscheinungen sind folgende Vorschläge bekannt:

Man kann die Videokamera zur Filmkamera synchronisieren. Dies ist aber nur bei festen Bildfrequenzen möglich. Ferner wird dadurch der Bildausfall nicht behoben.

Zusätzlich zu dieser erwähnten Synchronisation kann eine spezielle Spiegelblende vorgesehen sein, die zur Belichtung jedes Videohalbbildes dient. Auch dies ist nur bei fester Bildfrequenz möglich. Der Bildausfall wird zwar behoben, das Aufnahmelicht für die Filmkamera wird jedoch erheblich reduziert, so daß dieses Verfahren nur mit teuren Spezialfilmkameras (E-Cam) durchgeführt werden kann.

Ferner ist bereits vorgeschlagen worden, die Aufzeichnung von Teilbildern und deren Speicherung zeilenweise im Videotakt durchzuführen und diese Teilbilder zeilenweise zu Vollbildern zu ergänzen. Dieses Verfahren ist allerdings sehr aufwendig. Es bedingt große Spezialfilmkameras. Ein Ausführungsbeispiel ist in der DE-OS 34 37 210 beschrieben.

Nach einem weiteren Vorschlag (DE 3 833 823 A) werden Teilbilder ohne Speicherung abgetastet. Die Videoverstärkung wird umgekehrt proportional zur prozentualen Belichtung des jeweiligen Videobildes gesteuert, wobei diese Steuerung über Rechner und elektronische Tabellen erfolgen kann. Die elektronischen Tabellen können in Speichern, beispielsweise EPROM- oder PROM-Speichern abgelegt sein. Bei der Steuerung der Videoverstärkung wird das Phasen- und Frequenzverhältnis zwischen Video- und Filmkamera berücksichtigt. Dieses Verfahren ermöglicht allerdings eine Korrektur nur innerhalb enger Geschwindigkeitsgrenzen. Fehlende Bildteile können nicht ergänzt werden. Das Signal-Rausch-Verhältnis verschlechtert sich erheblich. Es ist eine speziell ausgerüstete Filmkamera erforderlich.

Nach einem weiteren Vorschlag wird eine Videokamera mit digitalem Zwischenspeicher verwendet, wobei der Zwischenspeicher in den Videosignalgang einer vorhandenen Videokamera, beispielsweise auf der Farbkomponentenebene, eingeschleift wird. Diese Methode bringt erhebliche technische und Qualitäts-Probleme durch die zahlreichen erforderlichen Eingriffsstellen innerhalb der Videokamera und die unbeabsichtigte Beeinflussung kamerainterner Signale. Diese Eingriffe sind bei Miniaturkameras kaum noch realisierbar.

Hiervon ausgehend liegt der Erfindung die Aufgabe zugrunde, ein Verfahren und eine Vorrichtung der eingangs angegebenen Art zu verbessern.

Erfindungsgemäß wird diese Aufgabe bei einem Verfahren der eingangs angegebenen Art durch die Merkmale des Anspruchs 1 gelöst. Die Aufgabe wird bei einer Vorrichtung der eingangs angegebenen Art durch die kennzeichnenden Merkmale des nebengeordneten Anspruchs 6 gelöst. Schließlich wird die Aufgabe durch die Verwendung eines Zusatzgeräts mit einem Zwischenspeicher zum Zwischenspeichern der Videobilder bei der Durchführung des Verfahrens nach einem der Ansprüche 1 bis 5 gelöst.

Nach dem erfindungsgemäßen Verfahren werden die Videobilder bzw. die diesen Videobildern entsprechenden Signale nach der Erfassung durch den Videosensor und vor der Zuleitung an die Videokamera in einem Zwischenspeicher zwischengespeichert. Das erfindungsgemäße Verfahren ist insbesondere für Filmkameras bzw. Spiegelreflex-Filmkameras geeignet. Es kann aber auch bei anderen periodisch unterbrochenen optischen Vorgängen eingesetzt werden, wobei die periodische Unterbrechung regelmäßig oder unregelmäßig sein kann. Die auf dem Videosensor auftretenden Hell-Dunkel-Phasen können aufgrund eines Helligkeitssignals des bildwichtigen Teiles des Sucherstrahlenganges durch einen Helligkeits-Detektor erfaßt werden. Es ist aber auch möglich, sie aus einem damit gekoppelten Vorgang in der Filmkamera abzuleiten, also ein Synchronsignal der Filmkamera zu verwenden.

Der Zwischenspeicher speichert die Videobilder. Insbesondere ist es möglich, daß der Zwischenspeicher den Bildinhalt auf Pixelebene speichert. Hierdurch ergibt sich gegenüber dem vorbekannten Stand der Technik der Vorteil, daß die Speicherung ohne wesentliche Eingriffe und insbesondere ohne wesentliche elektrische Eingriffe in die Videokamera realisiert werden kann. Die Lösung der Aufgabe, Flackererscheinungen zu vermeiden, erfolgt durch einen Eingriff zwischen CCD-Sensor und Videokamera und nicht - wie beim vorbekannten Stand der Technik - durch einen Eingriff in die Videokamera selbst. Die Übertragungsstelle zwischen Videosensor (CCD-Sensor) und Videokamera ist im allgemeinen leicht zugänglich oder doch zumindest überhaupt zugänglich. Dementsprechend kann die der Erfindung zugrundeliegende Aufgabe durch die Verwendung eines Zusatzgeräts mit einem Zwischenspeicher zum Zwischenspeichern von Videobildern beider Durchführung des Verfahrens nach einem der Ansprüche 1 bis 5 gelöst werden. Dieses Zusatzgerät befindet sich im Signalfluß zwischen Videosensor und Videokamera.

Vorteilhafte Weiterbildungen der Erfindung sind in den Unteransprüchen beschrieben.

Vorteilhaft ist es, die dem Videobild entsprechenden Pixelsignale vor dem Zwischenspeichern zu verstärken, was vorzugsweise durch einen Verstärker geschieht, vorzugsweise durch einen hochempfindlichen und/oder rauscharmen Verstärker, der vorteilhaft als AGC-Verstärker ausgeführt sein kann. Vorzugsweise werden die - gegebenenfalls verstärkten - dem Videobild entsprechenden Signale in digitale Signale umgewandelt und dann zwischengespeichert. Die gespeicherten, digitalisierten Videobilder werden vorzugsweise in analoge Signale umgewandelt und dann der Videokamera in der Form wie in der analog arbeitenden Original Video Kamera zugeleitet.

Nach einer weiteren vorteilhaften Weiterbildung wird ein Trigger-Signal zur filmsynchronen Steuerung externer Zubehör-Geräte erzeugt, z.B. abgeleitet vom Signal des Helligkeitsdetektors oder einem Synchronsignal der Filmkamera. Bei dem externen Zubehörgerät kann es sich beispielsweise um einen Positions-Laser handeln. Durch das Trigger-Signal kann gewährleistet werden, daß die Filmbelichtung bei keiner Filmgeschwindigkeit gestört wird, daß gleichzeitig aber das optische Signal sowohl im Aufnahmebereich der Filmkamera sowie im optischen Sucher als auch im Videosucher beobachtet werden kann. Das Trigger-Signal kann auch zur Steuerung einer optisch-elektronischen Schärfenmessung bzw. -automatik verwendet werden. Eine derartige Einrichtung kann dazu dienen, die Schärfe nicht - wie zur Zeit üblich - nur in der Bildmitte zu bestimmen, sondern an beliebigen, im Bildbereich einstellbaren Stellen.

Nach einer weiteren vorteilhaften Weiterbildung wird ein Zusatzgerät zur Durchführung des erfindungsgemäßen Verfahrens verwendet, wobei das Zusatzgerät einen Zwischenspeicher zum Zwischenspeichern der Videobilder aufweist. Vorteilhaft ist es, wenn in dem Zusatzgerät ein vorzugsweise hochempfindlicher und/oder rauscharmer Verstärker vorgesehen ist. In dem Zusatzgerät können ferner ein Analog-Digital-Wandler zum Umwandeln der verstärkten Videobilder in digitale Signale und/oder ein Digital-Analog-Wandler zum Umwandeln der gespeicherten digitalen Videobilder in analoge Signale und/oder eine Vorrichtung zur Erzeugung eines Trigger-Signals zur filmsynchronen Steuerung externer Zubehörgeräte vorgesehen sein.

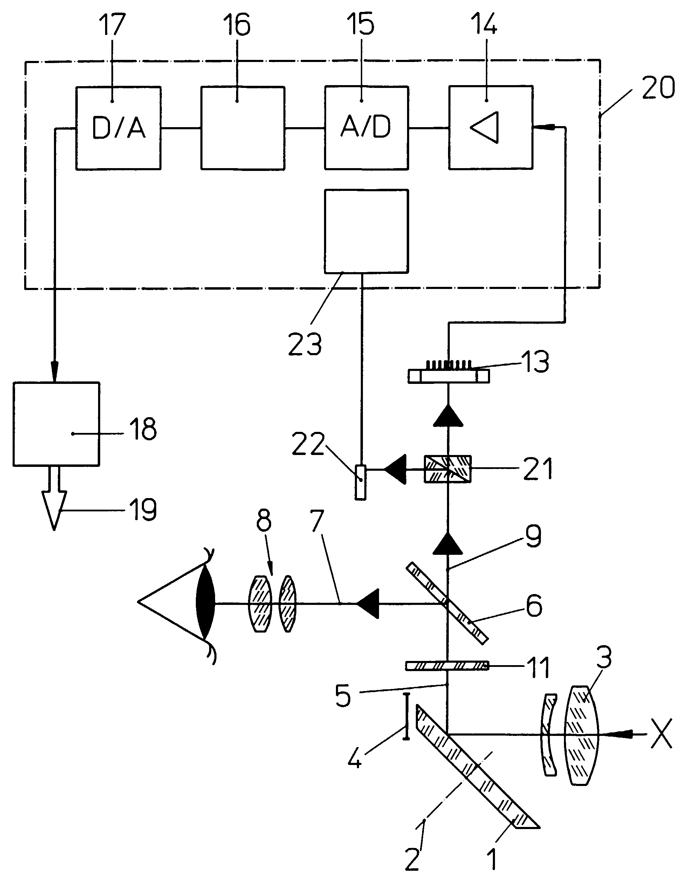

Ein Ausführungsbeispiel der Erfindung wird nachstehend anhand der beigefügten Zeichnung im einzelnen erläutert. In der Zeichnung zeigt die
- einzige Fig.: eine Laufbild-Filmkamera mit rotierender Spiegelblende, einer Sucheroptik, einem Videosensor, einer Video-Kamera, einem Helligkeitssensor und einem Zusatzgerät zum Vermeiden des Helligkeitsflimmerns des Videobildes.

Die in der einzigen Fig. gezeigte Laufbild-Filmkamera besitzt eine Spielgeblende 1, die um eine Achse 2 rotiert. Das Licht des aufzunehmenden Gegenstandes gelangt durch das Aufnahmeobjektiv 3 auf die Spiegelblende 1 bzw. - je nach deren Stellung - auf den dahinter befindlichen Film 4. Wenn das Licht auf die Spiegelblende 1 trifft und von dort im rechten Winkel abgelenkt wird, gelangt es in den Sucherstrahlengang 5, in dem sich ein Strahlteiler 6 befindet. Der abgelenkte Teilstrahl 7 gelangt durch das Okular 8 des Suchers in das Auge des Kameramanns, der durchgehende Teilstrahl 9 gelangt zum Videosensor 13 und im ausgeführten Beispiel über einen weiteren Strahlenteiler 21 zum Helligkeitssensor 22. Im Strahlengang 5 kann sich an der Stelle des Sucherbildes eine Mattscheibe 11 befinden.

Die vom Videosensor 13 erfaßten Videobilder werden einem hochempfindlichen, rauscharmen Verstärker 14 zugeführt, der diese Videobilder bzw. die diesen entsprechenden Signale verstärkt und gegebenenfalls als AGC-Verstärker ausgeführt ist. Die verstärkten Signale werden in einem Analog-Digital-Wandler 15 digitalisiert. Die digitalisierten Werte werden in einem digitalen Zwischenspeicher 16 zwischengespeichert. Die in dem digitalen Zwischenspeicher 16 gespeicherten Videobilder werden anschließend durch den Digital-Analog-Umwandler 17 in analoge Signale umgewandelt und einer Standard-Video-Kamera 18 zugeführt, die ein Video-Norm-Signal 19 abgibt.

Verstärker 14, A/D-Wandler 15, Zwischenspeicher 16 und D/A-Wandler 17 sowie die Stufen 23 zur Verarbeitung des vom Helligkeitssensor 22 oder einer anderen Triggersignalquelle erzeugten Synchronsignales können zu einem Zusatzgerät 20 zusammengefaßt werden, das sich im Signalfluß zwischen Videosensor 13 und Videokamera 18 befindet.

Durch die Erfindung wird ein Videokamerasystem zur synchronen Mitaufnahme des Sucherbildes von Spiegelreflexfilmkameras mit fester oder variabler Bildfolge oder anderweitiger Videoaufnahmen mit regelmäßig oder unregelmäßig unterbrochener Belichtung ohne Flickererscheinungen bei der Wiedergabe geschaffen. Durch das Videoaufnahmesystem werden während der Bildaufzeichnung mit einer Spiegelreflexlaufbildkamera synchron dazu über den Sucherkanal der Laufbildkamera Videobilder aufgenommen und mit einer festen Bildfolge nach Video-Norm ohne Flickererscheinungen (Bildinterferenz) wiedergegeben. Die Sucherbilder werden dem Videosensor (CCD-Sensor) 13 über die Ausspiegelung 6 aus dem Sucherstrahlengang 5 der Laufbildkamera zugeführt. Ein Helligkeitssignal des bildwichtigen Teiles des Sucherstrahlenganges oder ein Synchronsignal der Filmkamera triggert die Auslesung des Inhaltes des Videosensors 13 (des CCD-Sensor-Inhaltes) in den Zwischenspeicher des Videosensors (CCD-Sensors) in der Geschwindigkeit der Laufbildkamera. Von dort wird, getaktet durch die nachgeschaltete Videokamera 18 (ohne CCD-Sensor) der Bildinhalt auf Pixelebene digitalisiert (im Analog-Digital-Wandler 15 nach der Verstärkung durch den Verstärker 14) und in den Speicher 16 übernommen. Aus diesem Speicher 16 werden die "Videobilder" auf Pixelebene gemäß Videonorm abgerufen und (nach Umwandlung im Digital-Analog-Wandler 17) über die normale Videokamera 18 (ohne CCD-Sensor) weiterverarbeitet. Die Belichtungszeit des einzelnen Videobildes entspricht exakt der Lichtflußzeit im Sucherstrahlengang der Filmkamera oder eines anderen intermittierend unterbrochenen Strahlenganges. Bei der normgerechten Wiedergabe des Videobildes wird das während der Filmbelichtung nicht aufnehmbare Videohalbbild durch eine zusätzliche Auslesung aus dem Speicher 16 ergänzt. Durch diese Maßnahme wird der bei anderen Verfahren übliche Lichtverlust ausgeglichen. Variable Belichtungszeiten sind möglich. Im Ausführungsbeispiel sind Belichtungszeiten von über 100 ms (5 B/s) bis zur Videobelichtungszeit (20 ms) und kürzere Belichtungszeiten z.B. bis unter 2 ms (250 B/s Filmgeschwindigkeit) möglich. Andere Belichtungsmodalitäten sind durch geringfügige technische Änderungen möglich. Mehrfachbelichtungen ermöglichen z.B. eine Erhöhung der Empfindlichkeit bei ungünstigen Lichtverhältnissen und den Betrieb bei Filmkamerageschwindigkeiten über der Videofrequenz von beispielsweise bis 100 B/s oder mehr.

Durch die Erfindung wird es ermöglicht, die Einrichtung zur Vermeidung des Helligkeitsflimmerns des Videobildes ohne wesentliche elektrische Eingriffe in die Videokamera 18 zu realisieren. Insbesondere können die zur Vermeidung des Helligkeitsflimmerns erforderlichen Bauteile in dem Zusatzgerät 20 zusammengefaßt werden, welches ohne elektrische Eingriffe an nahezu jede Filmkamera oder andere optische Übertragungseinrichtung adaptierbar ist. Das Videoausgangssignal 19 ist in schwarz/weiß oder Farbe nach den internationalen Normen NTSC, PAL, EIA und CCIR möglich.

Durch das erfindungsgemäße Zusatzgerät 20 wird die "Frequenzumwandlung" des Videosucherbildes der Filmkamera von der Frequenz der Filmaufnahmekamera über den digitalen Zwischenspeicher 16 zur Video-Norm-Bildfrequenz (50 oder 60 Videohalbbilder) im Gegensatz zu allen bisher bekannten Verfahren auf der Ebene der Pixelsignale des Videosensors (CCD-Sensors) 13 durchgeführt. Hierdurch wird der Aufwand für die Eingriffe an der Videokamera 18 erheblich reduziert. Bei miniaturisierten Kameras wird die Vermeidung des Helligkeitsflimmerns überhaupt erst möglich.

Durch die Einschaltung des hochempfindlichen, rauscharmen Verstärkers 14 zwischen Videosensor (CCD) und Digitalisierung (in dem A/D-Wandler 15) wird der Störabstand des Videosignals bereits auf der Pixelebene verbessert, was zu einer Verbesserung des Störabstandes des Videosignales gegenüber bekannten Einrichtungen führt.

Das Zusatzgerät 20 besitzt bei einer Filmkameraanwendung eine automatische Erkennung, die bei Belichtungszeiten über einer bestimmten Grenze von beispielsweise 100 ms (dies entspricht 5 B/s oder weniger) in einen normalen Videoaufnahmemodus (mit 50/60 Hz) umschaltet (in der Zeichnung nicht dargestellt). Sie besitzt ferner bei einer Filmkameraanwendung eine Einrichtung, die ein fehlerhaftes Triggern durch Entladungslampen (mit beispielsweise 100/120 Hz) verhindert, wenn beispielsweise die normale Filmbelichtung unbeabsichtigt für eine bestimmte Zeit unterbrochen wird.

## Patentansprüche

1. Verfahren zum Vermeiden des Helligkeitsflimmerns des Videobildes eines auf den Strahlengang einer Filmkamera mit einer Spiegelblende oder einen anderen periodisch unterbrochenen optischen Strahlengang gerichteten Videosensor,
bei dem die von dem Videosensor (13) erfaßten Videobilder in einem zwischen dem Videosensor und der Videokamera vorgeschenen Zwischenspeicher (16) zwischengespeichert werden,
bei dem die zwischengespeicherten Videobilder einer Videokamera (18) ohne Videosensor zugeleitet werden,
wobei die auf dem Videosensor (13) auftretenden Hell-Dunkel-Phasen (Belichtungsintervalle) erfaßt werden.

2. Verfahren nach Anspruch 1, dadurch gekennzeichnet, daß die Videobilder vor dem Zwischenspeichern verstärkt werden, vorzugsweise durch einen hochempfindlichen und/oder rauscharmen Verstärker (14), vorzugsweise mit AGC.

3. Verfahren nach Anspruch 1 oder 2, dadurch gekennzeichnet, daß die gegebenenfalls verstärkten Videobilder in digitale Signale umgewandelt (15) und dann zwischengespeichert werden.

4. Verfahren nach Anspruch 3, dadurch gekennzeichnet, daß die gespeicherten digitalen Videobilder in analoge Signale umgewandelt (17) und dann der Videokamera (18) zugeleitet werden.

5. Verfahren nach einem der vorhergehenden Ansprüche, dadurch gekennzeichnet, daß ein Trigger-Signal zur filmsynchronen Steuerung externer Zubehör-Geräte erzeugt wird.

6. Vorrichtung zur Durchführung des Verfahrens nach einem der Ansprüche 1 bis 5, bestehend aus einem periodisch unterbrochenen optischen Strahlengang vorzugsweise einer Filmkamera mit einer Spiegelblende (1), einem Videosensor (13), einer Videokamera (18) ohne Videosensor, einem Detektor, vorzugsweise einem Helligkeitsdetektor zum Erfassen der auf dem Videosensor (13) auftretenden Hell-Dunkel-Phasen (Belichtungsintervalle), und einem Zwischenspeicher (16), der zwischen dem Videosensor (13) und der Videokamera (18) vorgesehen ist, zum Zwischenspeichern der Videobilder.

7. Vorrichtung nach Anspruch 6, gekennzeichnet durch einen Verstärker (14), vorzugsweise einen hochempfindlichen und/oder rauscharmen Verstärker, vorzugsweise mit AGC, zum Verstärken der Videobilder vor dem Zwischenspeichern.

8. Vorrichtung nach Anspruch 6 oder 7, gekennzeichnet durch einen Analog-Digital-Wandler (15) zum Umwandeln der gegebenenfalls verstärkten Videobilder in digitale Signale.

9. Vorrichtung nach Anspruch 8, gekennzeichnet durch einen Digital-Analog-Wandler (17) zum Umwandeln der im Zwischenspeicher (16) gespeicherten digitalen Videobilder.

10. Vorrichtung nach einem der Ansprüche 6 bis 9, gekennzeichnet durch eine Einrichtung zum Erzeugen eines Trigger-Signals zur filmsynchronen Steuerung externer Zubehör-Geräte.

11. Verwendung eines Zusatzgeräts mit einem Zwischenspeicher (16) zum Zwischenspeichern von Videobildern bei der Durchführung des Verfahrens nach einem der Ansprüche 1 bis 5.

12. Verwendung eines Zusatzgeräts nach Anspruch 11, wobei das Zusatzgerät einen Verstärker (14), vorzugsweise einen hochempfindlichen und/oder rauscharmen Verstärker, vorzugsweise mit AGC, zum Verstärken der Videobilder vor dem Zwischenspeichern aufweist.

13. Verwendung eines Zusatzgeräts nach Anspruch 11 oder 12, wobei das Zusatzgerät einen Analog-Digital-Wandler (15) zum Umwandeln der gegebenenfalls verstärkten Videobilder in digitale Signale aufweist.

14. Verwendung eines Zusatzgeräts nach Anspruch 13, wobei das Zusatzgerät einen Digital-Analog-Wandler (17) zum Umwandeln der im Zwischenspeicher (16) gespeicherten digitalen Videobilder aufweist.

15. Verwendung eines Zusatzgeräts nach einem der Ansprüche 11 bis 14, wobei das Zusatzgerät eine Einrichtung zum Erzeugen eines Trigger-Signals zur filmsynchronen Steuerung externer Zubehör-Geräte aufweist.

## Claims

1. Method for preventing the brightness/luminance flickering of a video image of a video sensor aimed at the ray path of a film camera with an aperture mirror, or at some other periodically interrupted optical ray path
in which the video images captured by the video sensor (13) are temporarily stored in and intermediate memory provided between the video sensor and the video camera,
and in which the temporarily stored video images are fed to a video camera (18) without a video sensor,
wherein the light-dark phases (exposure range intervals) occurring at the video sensor (13) are detected.

2. Method according to Claim 1, characterized in that the video images are intensified prior to their temporary storage, preferably by a high-sensitivity and/or low-noise amplifier (14), preferably with automatic gain control (AGC).

3. Method according to Claim 1 or 2, characterized in that the possibly intensified video images are converted into digital signals (15) and then temporarily stored.

4. Method according to Claim 3, characterized in that the stored digital video images are converted into analog signals (17) and then fed to the video camera (18).

5. Method according to one of the preceding Claims, characterized in that a trigger signal is generated to enable the film-synchronous control of external auxiliary devices.

6. Device for executing the method according to one of Claims 1 to 5 comprising a periodically interrupted optical ray path, preferably a film camera with an aperture mirror (1), a video sensor (13), a video camera (18) without a video sensor, a detector, preferably a brightness detector for sensing the light-dark phases (exposure range intervals) occurring at said video sensor (13), and an intermediate memory (16) provided between said video sensor (13) and said video camera (18) for temporary storage of the video images.

7. Device according to Claim 6, characterized by an amplifier (14), preferably a high-sensitivity and/or low-noise amplifier, preferably with automatic gain control (AGC), for intensifying the video images prior to temporary storage.

8. Device according to Claim 6 or 7, characterized by an analog/digital converter (15) for converting the possibly intensified video images into digital signals.

9. Device according to Claim 8, characterized by a digital/analog converter (17) for converting the digitized video images stored in the intermediate memory (16).

10. Device according to Claims 6 to 9, characterized by a device for generating a trigger signal to enable the film-synchronous control of external auxiliary devices.

11. Use of an auxiliary device with an intermediate memory (16) for the temporary storage of video images during execution of the method according to one of Claims 1 to 5.

12. Use of an auxiliary device according to Claim 11, wherein said auxiliary device features an amplifier (14), preferably a high-sensitivity and/or low-noise amplifier, preferably with automatic gain control (AGC), for intensifying the video images prior to temporary storage.

13. Use of an auxiliary device according to Claim 11 or 12, wherein said auxiliary device features an analog/digital converter (15) for converting the possibly intensified video images into digital signals.

14. Use of an auxiliary device according to Claim 13, wherein said auxiliary device features a digital/analog converter (17) for converting the digitized video images stored in the intermediate memory (16).

15. Use of an auxiliary device according to one of claims 11 to 14, wherein said auxiliary device features a device for generating a trigger signal for the film-synchronous control of external auxiliary devices.

## Revendications

1. Méthode pour empêcher le papillotement de la luminosité de l'image vidéo d'un capteur vidéo dirigé sur la trajectoire de rayons d'une caméra cinématographique présentant un diaphragme miroitant ou sur une autre trajectoire de rayons optiques périodiquement interrompue, dans laquelle les images vidéo captées par le capteur vidéo (13) sont entrestockées dans une mémoire intermédiaire (16) prévue entre le capteur vidéo et la caméra vidéo, dans laquelle les images vidéo entrestockées sont acheminées à une caméra vidéo (18) sans capteur vidéo, les phases claires/obscures (intervalles d'exposition) qui apparaissent sur le capteur vidéo (13) étant captées.

2. Méthode selon la revendication 1, caractérisée en ce que les images vidéo sont renforcées avant leur entrestockage, de préférence par un amplificateur (14) hautement sensible et/ou pauvre en bruit, comportant de préférence une CGA (commande de gain automatique).

3. Méthode selon les revendications 1 ou 2, caractérisée en ce que les images vidéo, le cas échéant renforcées, sont transformées en signaux numériques (15) et sont ensuite entrestockées.

4. Méthode selon la revendication 3, caractérisée en ce que les images vidéo numériques stockées sont transformées en signaux analogiques (17) et sont ensuite acheminées à la caméra vidéo (18).

5. Méthode selon l'une quelconque des revendications précédentes, caractérisée en ce qu'un signal de déclenchement est produit pour la commande synchrone au film d'appareils accessoires externes.

6. Dispositif pour l'exécution de la méthode selon l'une quelconque des revendications 1 à 5, consistant en une trajectoire de rayons optiques périodiquement interrompue, de préférence d'une caméra cinématographique présentant un diaphragme miroitant (1), un capteur vidéo (13), une caméra vidéo (18) sans capteur vidéo, un capteur, de préférence un capteur de luminosité pour capter les phases claires/obscures (intervalles d'exposition) qui apparaissent sur le capteur vidéo (13) et une mémoire intermédiaire (16) qui est prévue entre le capteur vidéo (13) et la caméra vidéo (18) pour entrestocker les images vidéo.

7. Dispositif selon la revendication 6, caractérisé par un amplificateur (14), de préférence un amplificateur hautement sensible et/ou pauvre en bruit, de préférence équipé d'une CGA, pour renforcer les images vidéo avant leur entrestockage.

8. Dispositif selon les revendications 6 ou 7, caractérisé par un convertisseur analogique/numérique (15) pour convertir les images vidéo le cas échéant renforcées en signaux numériques.

9. Dispositif selon la revendication 8, caractérisé par un convertisseur numérique/analogique (17) pour convertir les images vidéo numériques stockées dans la mémoire intermédiaire (16).

10. Dispositif selon l'une quelconque des revendications 6 à 9, caractérisé par un dispositif pour produire un signal de déclenchement pour la commande synchrone au film d'appareils accessoires externes.

11. Utilisation d'un appareil accessoire comportant une mémoire intermédiaire (16) pour entrestocker des images vidéo lors de l'exécution de la méthode selon l'une quelconque des revendications 1 à 5.

12. Utilisation d'un appareil accessoire selon la revendication 11, l'appareil accessoire présentant un amplificateur (14), de préférence un amplificateur hautement sensible et/ou pauvre en bruit, de préférence équipé d'une CGA, pour renforcer les images vidéo en amont de la mémoire intermédiaire.

13. Utilisation d'un appareil accessoire selon les revendications 11 ou 12, l'appareil accessoire présentant un convertisseur analogique/numérique (15) pour convertir les images vidéo le cas échéant renforcées en signaux numériques.

14. Utilisation d'un appareil accessoire selon la revendication 13, l'appareil accessoire présentant un convertisseur numérique/analogique (15) pour convertir les images vidéo numériques stockées dans la mémoire intermédiaire (16).

15. Utilisation d'un appareil accessoire selon l'une quelconque des revendications 11 à 14, l'appareil accessoire présentant un dispositif pour produire un signal de déclenchement pour la commande synchrone au film d'appareils complémentaires externes.
